# EUROPEAN PATENT SPECIFICATION

(11) **EP 2 146 391 B1**
(45) Date of publication and mention of the grant of the patent: **25.07.2012**
(21) Application number: 09163039.2
(22) Date of filing: 18.06.2009
(51) Int. Cl.: H01Q 1/24, H01Q 1/27, H01Q 9/04, G02F 1/13, G04G 21/04, H01Q 1/44

(54) **Electro-optical component**
Elektrooptische Komponente
Composant électro-optique

(30) Priority: 04.07.2008 FI 20085699
(43) Date of publication of application: 20.01.2010
(73) Proprietor: Polar Electro Oy, 90440 Kempele (FI)
(72) Inventor: Pekonen, Elias, 90100 Oulu (FI)
(74) Representative: Antila, Harri Jukka Tapani

(56) References cited:
- EP-A- 1 286 413
- EP-A- 1 603 101
- WO-A-02/25770
- US-A- 5 007 105

## Description

### Field

The invention relates generally to antenna solutions and viewing displays.

### Background

Nowadays electrical devices are designed to be as small as possible to enable practical everyday usability. Since one of the most space consuming components of the electric device is typically an antenna, it is desirable that the space consumed by the antenna is relatively small with respect to the size of the device. This enables implementation of other electric components in the device without increasing the size of the device.

Generally, patch antennas are applied to small electric devices to enable a small antenna size. This is accomplished by using a dielectric substrate material other than air. The dielectric substrate material with a large dielectric constant enables a decrease in the physical size of the antenna without decreasing the electrical length. However, decreasing the size of the antenna causes the gain of the antenna to weaken, the bandwidth of the antenna to narrow, and the carrier frequency of the antenna to increase. Further, the small size of an antenna may prevent the matching of the antenna to circular polarized electromagnetic waves.

Document US 5,007,105 discloses an inverted F-antenna being used in connection with a display.

Document WO 02/25770 discloses a patch antenna used in connection with a display.

Document EP 1603101 discloses a display unit for portable devices.

Thus, in order to maintain a good performance of the antenna and to prevent the antenna from consuming unnecessary space in the electric device, other solutions than decreasing the antenna size are needed.

### Brief description of the invention

An object of the invention is to provide an electro-optical component.

According to an aspect of the invention, there are provided apparatuses as specified in claims 1 and 9.

According to an aspect of the invention, there is provided a method as specified in claim 6.

Embodiments of the invention are disclosed in the dependent claims.

### List of drawings

In the following, the invention will be described in greater detail with reference to the embodiments and the accompanying drawings, in which
Figure 1 presents a side view of an electro-optical component;
Figure 2 shows a side view of an electro-optical component according to an embodiment;
Figure 3 shows a view of a display in the electro-optical component, according to an embodiment;
Figure 4 illustrates an embodiment of the electro-optical component;
Figure 5 illustrates an embodiment of the electro-optical component;
Figure 6 presents a method o manufacturing the electro-optical component; and
Figure 7 presents a method of integrating the electro-optical component in a wrist device.

### Description of embodiments

The following embodiments are exemplary. Although the specification may refer to "an", "one", or "some" embodiment(s) in several locations of the text, this does not necessarily mean that each reference is made to the same embodiment(s), or that a particular feature only applies to a single embodiment.

In addition to the space that may be consumed by the antenna of an electric device, also a display may require a significant amount of space. A display that uses a lot of space limits the size of the antenna and thereby leads to small antennas with, for example, weak gains and inability to fully exploit circular polarization. Thus, according to an embodiment of the invention, integrating the antenna and the display of the electric device together enables use of a large antenna with a reasonably good gain and relatively small space usage, compared to the overall size of the electric device. This way, the antenna may need only little or no additional space since the space requirement of the antenna is included in the space requirement of the display.

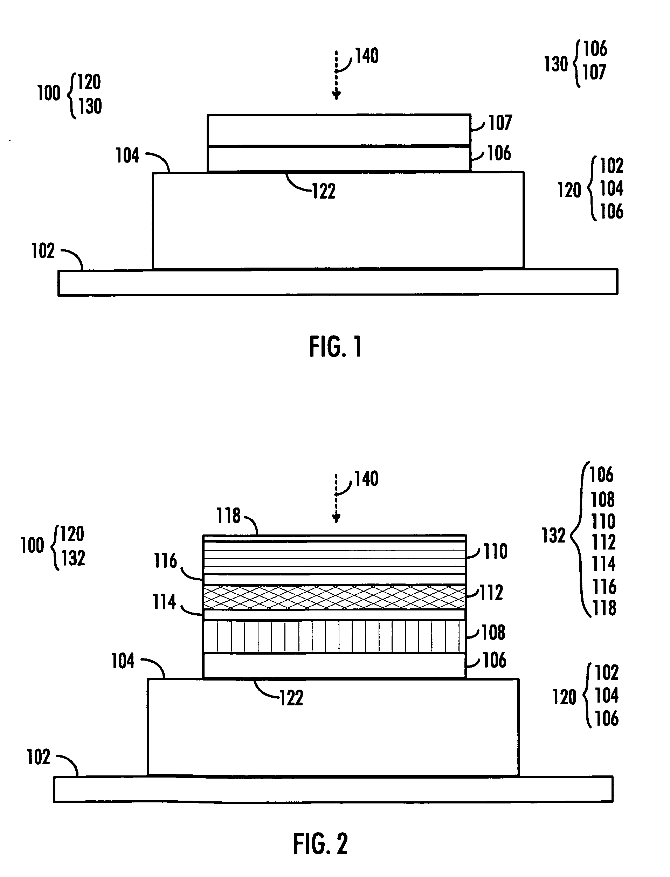

Figure 1 presents a side view of an electro-optical component 100. The electro-optical component 100 may comprise a patch antenna 120 and a display 130 integrated together, an electrically conductive structure 106 common to the patch antenna 120 and the display 130, wherein the electrically conductive structure 106 may transmit and/or receive radio frequency electromagnetic energy wirelessly and reflect light in the display 130 into a viewing direction. The electro-optical component 100 may be applied to any wireless radio transceiver, such as a wrist computer, a palm computer, a global positioning system (GPS) receiver, a navigator or a sensor unit of a performance monitor, where handling of electromagnetic radio frequencies and display of information are desired.

In an embodiment, the patch antenna 120 and the display 130 are integrated together such that the display 130 is superimposed on the patch antenna 120 as shown in Figure 1. However, the integration of the patch antenna 120 and the display 130 may also occur in other ways, depending on the structure of the patch antenna 120 and the display 130. For example, they may be adjacent to each other such that the electrically conductive structure 106 may be common to the patch antenna 120 and the display 130 and the electrically conductive structure 106 may interact with a radio frequency electromagnetic signal and reflect light 140 in the display 130 into the viewing direction.

In an embodiment, the antenna of the electro-optical component 100 is a patch antenna 120. In addition to the electrically conductive structure 106, the patch antenna 120 may further comprise an electrically grounded plane 102, and a dielectric substrate 104 between the electrically grounded plane 102 and the electrically conductive structure 106. The dielectric substrate 104 may be manufactured from a material having a large dielectric constant, thereby enabling a decrease in the size of the patch antenna 120. The electrically conductive structure 106 may be a metallic structure and the shape of the electrically conductive structure 106 may vary. Basically any continuous shape of the electrically conductive structure 106 is possible.

The patch antenna 120 may be used for both transmitting and/or receiving electromagnetic energy wirelessly. When the patch antenna 120 is used for transmitting, an electric circuit of the electric device comprising the electro-optical component 100 may feed radio frequency energy via a microstrip line to a feeding point 122 at the electrically conductive structure 106 which may be triggered to radiate as a response to the received radio frequency energy. On the other hand, the patch antenna 120 may be used for receiving electromagnetic radiation at a certain radio frequency from the electromagnetic field surrounding the patch antenna 120.

The display 130 of the electro-optical component 100 may be any display that has light reflecting characteristics. Accordingly, the display 130 may comprise a light reflecting electrically conductive structure 106 common to the patch antenna 120 and the display 130. The display 130 may further comprise an optically functional element 107 to enable display of information in the viewing direction. A viewing direction may be any direction from which the user of the electro-optical component 100 may view the information shown on the display 130.

Moreover, the display 130 may comprise one or more lighting elements such as light emitting diodes (LED) positioned on the side of the display 130 or an electroluminescence structure positioned between the optically functional element 107 and the electrically conductive structure 106 in order to illuminate the display.

According to an embodiment, the display 130 of the electro-optical component 100 may be based on propagation of polarized light 140 in the display 130. That is, the information shown on the display 130 may be based on the propagation of polarized light 140 in the display 130. Polarization denotes the direction of the electric field with respect to the direction of the plane wave (light). In general, light 140 may have two components perpendicular to each other. Light 140, being unpolarized such that the polarizations of the emitted light are independent of each other at any given time, may be polarized to include only one of the two components, for example, only a vertical or a horizontal component, by passing the light 140 through a horizontally or vertically polarizing filter, respectively.

In an embodiment, the display 130 of the electro-optical component 100 may be based on controlling of a polarization direction of the light 140 in the display 130. The direction of the polarization of the light 140 is controlled such that inside the display 130, the light 140 may be linearly polarized either horizontally or vertically. This may be accomplished by employing polarizing filters in the display 130. Moreover, the polarization of the light 140 may be twisted from vertical to horizontal polarization, or vice versa. This may be accomplished by the optically functional element 107 of the display 130. The optically functional element 107 may comprise material that may twist the polarization direction of the light 140 inside the display. An example of such a material that may twist the polarization direction of the light 140 is a twisted nematic liquid crystal.

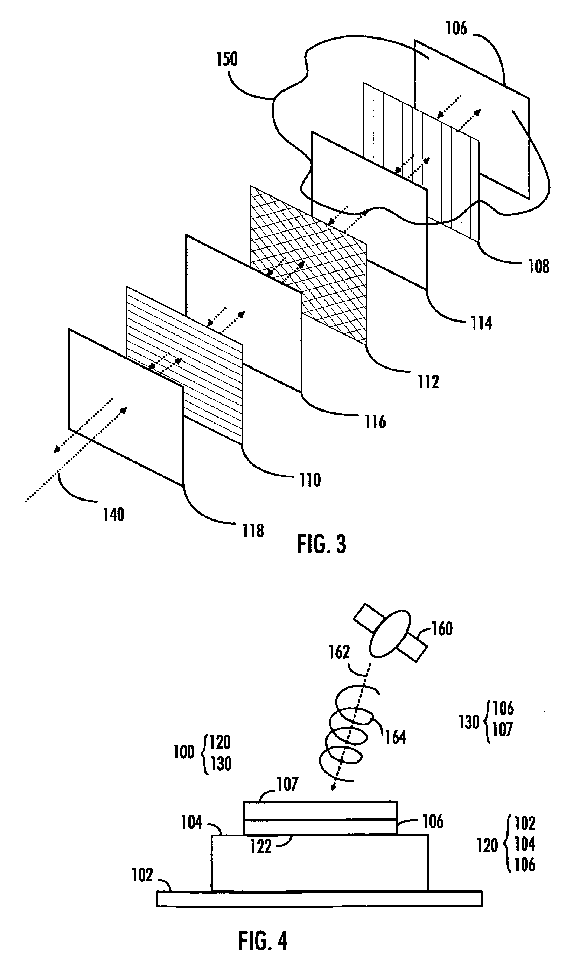

Accordingly, in an embodiment, the display 130 is a liquid crystal display (LCD) 132. The structure and functionality of the LCD 132 are shown in Figures 2 and 3, respectively. Figure 2 shows that the LCD 132 may comprise a light reflecting surface, which is the electrically conductive structure 106 common to the patch antenna 120 and the LCD 132, two polarizing filters 108, 110 whose polarization axes may be perpendicular to each other, two electrodes 114, 116 and an optically active material 112. Further, the LCD 132 may comprise a surface element 118 that may be used for shielding the LCD 132.

In Figure 3, the polarizing filter 110 may be a horizontal polarizing filter that passes only vertically polarized light 140, which includes only the vertical light component, through the polarizing filter 110. The optically active material 112 may be placed between the two electrodes 114, 116. The optically active material 112 may comprise, for example, twisted nematic liquid crystals. The direction of the twisted nematic liquid crystals may be determined by the alignment of the surface of the electrodes 114, 116. The surface alignment of the electrodes 114, 116 may be, when no electric field is applied, arranged to be perpendicular to each other. The perpendicular surface alignment may generate a helical structure in the twisted nematic liquid crystals of the optically active material 112. Thus, the light 140 passing through the horizontal polarizing filter 110 may be twisted from vertical polarization to horizontal polarization in the optically active material 112. Consequently, the vertical polarizing filter 108 may pass the horizontally polarized light 140 through the vertical polarizing filter 108. After this the light 140 may reflect back into the viewing direction from the electrically conductive structure 106 and, thus, the assembly may be transparent to the viewer.

Further, the electrodes 114, 116 may be electrically controllable and they may control the direction of the twisted nematic liquid crystals in the optically active material 112. When an electric field is applied to the electrodes 114, 116, the helical structure in the twisted nematic liquid crystals of the optically active material 112 may change to a linear structure. The twisted nematic liquid crystals that are linearly structured may not twist the vertically polarized light 140. As the vertically polarized light 140 may not be twisted to horizontal polarization, the vertical polarizing filter 108 may block the vertically polarized light 140, thereby resulting in a black spot in the LCD 132. Accordingly, by varying the level of the electric field applied to the electrodes 114, 116, the information shown on the LCD 132 may be controlled. Since the electrodes may be comprised of pixels, the electric field may be applied only to some of the pixels in the electrodes 114, 116, thereby enabling partial blocking/passing of light 140 through the LCD 132.

The number of polarizing filters 108, 110 is not limited to two. For example, when the two electrodes 114, 116 control the direction of the twisted nematic liquid crystals such that the twisted nematic liquid crystals are twisted 45 degrees, only one polarization filter may be needed.

Figure 3 shows that the electrically conductive structure 106 may transmit and/or receive electromagnetic energy wirelessly using a radiation beam 150. The radiation beam 150 may be partially blocked by the elements of the display 130. However, the improvement in the gain of the patch antenna 120 obtained by using a large antenna in the electric device may provide improved overall performance compared to the prior art antenna solutions.

In Figure 4 it is shown that, according to an embodiment, the electro-optical component 100 may be used in satellite communications. More particularly, the electrically conductive structure 106 may receive electromagnetic radio frequency satellite transmission 162. The satellite 160 emitting the electromagnetic satellite transmission 162 may be used for localization purposes. Accordingly, the electro-optical component 100 may be applied to receiving the electromagnetic satellite transmission 162 from a satellite 160 via the patch antenna 120 and to displaying localization information via the display 130.

Further, according to the embodiment, the electro-optical component 100 interacts with a circular polarized radio frequency signal 164. As shown in Figure 4, the electromagnetic satellite transmission 162 may be circularly polarized. As the size of the patch antenna 120 may be large, the patch antenna 120 is designed to match the circular polarized radio frequency signal 164. This way the polarization efficiency of the patch antenna 120 may be significantly improved. Especially in wrist devices, where the prior art antenna solutions comprise relatively small antennas, which employ linear polarization, the use of a large patch antenna 120 matched to receive the circular polarized radio frequency signal may offer significant performance improvements. Moreover, when the electro-optical component 100 is applied to a GPS receiver, the matching of the patch antenna 120 to the circular polarized radio frequency signal 164 is especially advantageous since the reflected GPS signals can be discarded. This is because typically the rotation direction of the electric field in the reflected signal has been changed from the rotation direction of the electric field in the transmitted signal (for example, from a right-hand circular polarization to a left-hand circular polarization). As a result, the location accuracy may be improved.

The electric field vector of light may be arbitrarily divided into two perpendicular components with a certain amplitude and phase. The patch antenna 120 may be made to match the circular polarized radio frequency signal 164 by feeding energy to the electrically conductive structure 106 at the feeding point 122 such that the phase difference between the two perpendicular components of the feeding signal is 90 degrees. Alternatively, the patch antenna 120 may be designed to match the circular polarized radio frequency signal 164 by feeding the electrically conductive structure 106 asymmetrically such that the feeding point 122 is not in the middle of the electrically conductive structure 106.

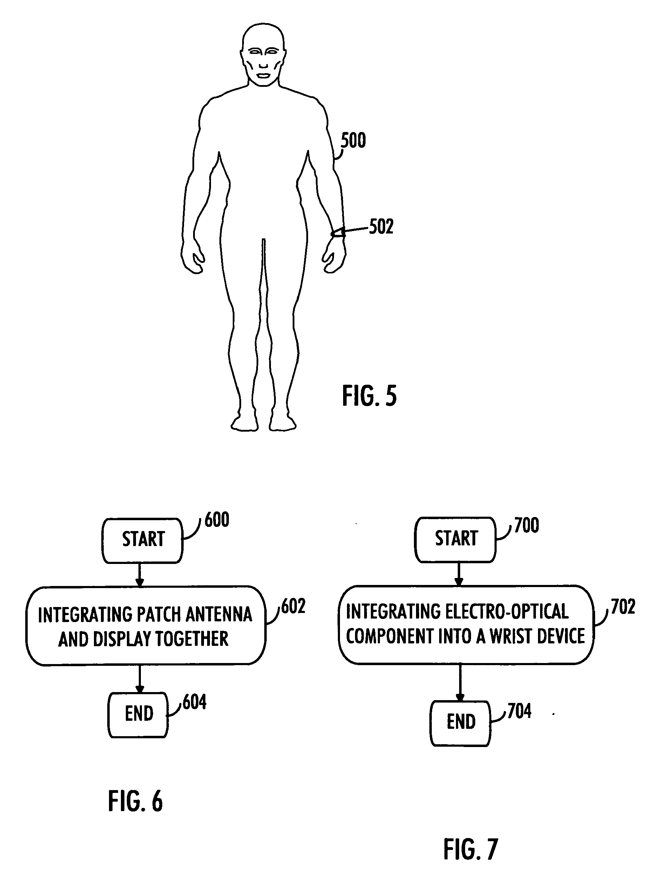

Figure 5 presents a wrist device 502 comprising the electro-optical component 100. Accordingly, in an embodiment, the electro-optical component 100 may be applied to a wrist device 502 that is worn by a person 500 on his/her wrist. The wrist device 502 may be, for example, a GPS receiver capable of receiving satellite transmission and providing the person 500 with localization information via the display 130.

Further, in an embodiment, the electro-optical component 100 may be applied to the wrist device 502 as a part of a performance monitoring system. The system may further include a heart rate transmitter, an external GPS receiver or a motion sensor attachable to the user's body. Further, the wrist device 502 may be connected to a computer or another external computing device via, for example, a USB (Universal Serial Bus) or another standard interface.

Figure 6 presents a method for manufacturing the electro-optical component 100. The method starts in step 600. Step 602 comprises integrating the patch antenna 120 and the display 130 together such that the electrically conductive structure 106 is common to the patch antenna 120 and the display 130, wherein the electrically conductive structure 106 is capable of transmitting and/or receiving a radio frequency electromagnetic energy wirelessly and reflecting light 140 in the display 130 into a viewing direction. The patch antenna 120 and the display 130 may be integrated together, for example by gluing or soldering. The electrically conductive structure 106 may be manufactured, for example, by etching or by means of photolithography. The patch antenna 120 and the display 130 may be integrated together such that the display 130 is superimposed on the patch antenna 120. That is, the patch antenna 120 and the display 130 may form a layered structure. However, the invention is not limited to this, but the integration may occur differently. For example, the patch antenna 120 and the display 130 may be adjacent to each other such that the electrically conductive structure 106 may be common to the patch antenna 120 and the display 130 and the electrically conductive structure 106 may interact with a radio frequency electromagnetic signal and reflect light 140 into the display 130 to the viewing direction. The method ends in step 604.

The method may further comprise placing the dielectric substrate 104 of the patch antenna 120 between the electrically grounded plane 102 and the electrically conductive structure 106. The patch antenna 120 is made to match a circular polarized radio signal to enable accurate localization in GPS receivers and a good overall performance of the patch antenna 120.

Figure 7 presents a method of manufacturing a wrist device comprising the electro-optical component 100. The method starts in step 700. In step 702, the method comprises integrating the electro-optical component 100 into the wrist device 502. The electro-optical component 100 in the wrist device 502 may be, for example, a GPS receiver, a performance monitor or a motion sensor. The method ends in step 704.

Even though the invention has been described above with reference to an example according to the accompanying drawings, it is clear that the invention is not restricted thereto but can be modified in several ways within the scope of the appended claims. Further, it is clear to a person skilled in the art that the described embodiments may, but are not required to, be combined with other embodiments in various ways.

## Claims

1. An electro-optical component (100) comprising:
a patch antenna (120) and a display (130) integrated together, an electrically conductive structure (106) common to the patch antenna (120) and the display (130), wherein the electrically conductive structure (106) is configured to transmit and/or receive radio frequency electromagnetic energy wirelessly and to reflect light (140) in the display (130) into a viewing direction, **characterised in that** the patch antenna (120) is configured for a circular polarized radio frequency signal (164).

2. The electro-optical component (100) of claim 1, wherein the patch antenna (120) further comprises an electrically grounded plane (102), and a dielectric substrate (104) between the electrically grounded plane (102) and the electrically conductive structure (106).

3. The electro-optical component (100) of any of the preceding claims, wherein the display (130) is based on propagation of polarized light (140) in the display.

4. The electro-optical component (100) of any of the preceding claims, wherein the electrically conductive structure (106) is configured to receive electromagnetic radio frequency satellite transmission (162).

5. The electro-optical component (100) of any of the preceding claims, wherein the display (130) is a liquid crystal display (LCD).

6. A method of manufacturing an electro-optical component (100), comprising:
integrating a patch antenna (120) and a display (130) together such that an electrically conductive structure (106) is common for the patch antenna (120) and the display (130), wherein the electrically conductive structure (106) is capable of transmitting and/or receiving radio frequency electromagnetic energy wirelessly and reflecting light (140) in the display (130) into a viewing direction, **characterised in that** the patch antenna (120) is for a circular polarized radio frequency signal (164).

7. The method of claim 6, further comprising:
placing a dielectric substrate (104) of the patch antenna (120) between an electrically grounded plane (102) and the electrically conductive structure (106).

8. The method of any of the preceding claims 6 to 7, further comprising:
integrating the electro-optical component (100) into a wrist device (502)._{.}

9. A wrist device (502), comprising an electro-optical component (100) according to claims 1 to 5.

## Patentansprüche

1. Eine elektrooptische Komponente (100), die Folgendes aufweist:
eine Patchantenne (120) und ein Display (130), die miteinander integriert sind, eine der Patchantenne (120) und dem Display (130) gemeinsame, elektrisch leitfähige Struktur (106), wobei die elektrisch leitfähige Struktur (106) konfiguriert ist, drahtlos Radiofrequenz - elektromagnetische Energie zu übertragen und/oder zu empfangen und Licht (140) in dem Display (130) in eine Sichtrichtung zu reflektieren, **dadurch gekennzeichnet, dass** die Patchantenne (120) für ein kreisförmiges polarisiertes Radiofrequenzsignal (164) konfiguriert ist.

2. Die elektrooptische Komponente (100) gemäß dem Patentanspruch 1, wobei die Patchantenne (120) weiterhin eine elektrisch geerdete Ebene (120) und ein dielektrisches Substrat (104) zwischen der elektrisch geerdeten Ebene (102) und der elektrisch leitfähigen Struktur (106) aufweist.

3. Die elektrooptische Komponente (100) gemäß einem der vorhergehenden Patentansprüche, wobei das Display (130) auf Propagierung von polarisiertem Licht (140) im Display basiert ist.

4. Die elektrooptische Komponente (100) gemäß einem der vorhergehenden Patentansprüche, wobei die elektrisch leitfähige Struktur (106) konfiguriert ist, eine elektromagnetische Radiofrequenz-Satellit-Übertragung (162) zu empfangen.

5. Die elektrooptische Komponente (100) gemäß einem der vorhergehenden Patentansprüche, wobei das Display (130) eine Flüssigkeitskristallanzeige (LCD) ist.

6. Ein Verfahren zum Herstellen einer elektrooptischen Komponente (100), das Folgendes aufweist:
eine Patchantenne (120) und ein Display (130) zusammen derart integrieren, dass eine elektrisch leitfähige Struktur (106) gemeinsam für die Patchantenne (120) und das Display (130) ist, wobei die elektrisch leitfähige Struktur (106) fähig ist, drahtlos Radiofrequenz - elektromagnetische Energie zu übertragen und/oder zu empfangen und Licht (140) in dem Display (130) in eine Sichtrichtung zu reflektieren, **dadurch gekennzeichnet, dass** die Patchantenne (120) für ein kreisförmiges polarisiertes Radiofrequenzsignal (164) angeordnet ist.

7. Das Verfahren gemäß dem Patentanspruch 6, das weiterhin Folgendes aufweist:
ein dielektrisches Substrat (104) der Patchantenne (120) zwischen eine elektrisch geerdete Ebene (102) und die elektrisch leitfähige Struktur (106) platzieren.

8. Das Verfahren gemäß einem der vorhergehenden Patentansprüche 6 - 7, das weiterhin Folgendes aufweist:
die elektrooptische Komponente (100) in ein Handgelenksgerät (502) integrieren.

9. Ein Handgelenkgerät (502), das eine elektrooptische Komponente (100) gemäß den Ansprüchen 1 - 5 aufweist.

## Revendications

1. Composant électro-optique (100) comprenant :
une antenne patch (120) et un affichage (130) intégrés ensemble, une structure électriquement conductrice (106) commune avec l'antenne patch (120) et l'affichage (130), laquelle structure électriquement conductrice (106) est configurée pour émettre et/ou recevoir une énergie électromagnétique radioélectrique sans fil, et pour réfléchir la lumière (140) dans l'affichage (130) dans une direction de visualisation, **caractérisé en ce que** l'antenne patch (120) est configurée pour un signal radioélectrique polarisé de manière circulaire (164).

2. Composant électro-optique (100) selon la revendication 1, dans lequel l'antenne patch (120) comprend en outre un plan mis à la masse électriquement (102) et un substrat diélectrique (104) situé entre le plan mis à la masse électriquement (102) et la structure électriquement conductrice (106).

3. Composant électro-optique (100) selon l'une quelconque des revendications précédentes, dans lequel l'affichage (130) est basé sur la propagation d'une lumière polarisée (140) dans l'affichage.

4. Composant électro-optique (100) selon l'une quelconque des revendications précédentes, dans lequel la structure électriquement conductrice (106) est configurée pour recevoir une émission par satellite radioélectrique électromagnétique (162).

5. Composant électro-optique (100) selon l'une quelconque des revendications précédentes, dans lequel l'affichage (130) est un affichage à cristaux liquides (LCD).

6. Procédé de fabrication d'un composant électro-optique (100) comprenant une étape consistant à :
intégrer ensemble une antenne patch (120) et un affichage (130) de telle sorte qu'une structure électriquement conductrice (106) soit commune avec l'antenne patch (120) et l'affichage (130), laquelle structure électriquement conductrice (106) peut émettre et/ou recevoir une énergie électromagnétique radioélectrique sans fil et réfléchir la lumière (140) dans l'affichage (130) dans une direction de visualisation, **caractérisé en ce que** l'antenne patch (120) est configurée pour un signal radioélectrique polarisé de manière circulaire (164).

7. Procédé selon la revendication 6, comprenant en outre une étape consistant à :
placer un substrat diélectrique (104) de l'antenne patch (120) entre un plan mis à la masse électriquement (102) et la structure électriquement conductrice (106).

8. Procédé selon l'une quelconque des revendications précédentes 6 à 7, comprenant en outre une étape consistant à :
intégrer le composant électro-optique (100) dans un dispositif porté au poignet (502).

9. Dispositif porté au poignet (502) comprenant un composant électro-optique (100) selon l'une quelconque des revendications 1 à 5.
